# EUROPÄISCHE PATENTANMELDUNG

(11) **EP 0 921 313 A2**
(43) Veröffentlichungstag der Anmeldung: **09.06.1999**
(21) Anmeldenummer: 98123296.0
(22) Anmeldetag: 08.12.1998
(51) Int. Cl.: F04C 2/344

(54) **Flügelzellenpumpe**

(30) Priorität: 08.12.1997 DE 29721669 U
(71) Anmelder: Wälchli, Hans, Dr., 8113 Boppelsen (CH)
(72) Erfinder: Wälchli, Hans, Dr., 8113 Boppelsen (CH)
(74) Vertreter: Blum, Rudolf Emil Ernst

(57) **Zusammenfassung**

Bei einer Flügelzellenpumpe (1) ist die innere Führungskurve für die Flügel (5) von der Aussenseite eines Körpers (8) gebildet, der nach oben hin eine Ausformung (12) aufweist. Diese dient einerseits als Haltegriff zum Ein- und Ausbau des Körpers und andererseits als Verdrehsicherung, da sie bei geschlossenem Deckel (2a) in eine Ausnehmung (16) desselben eingreift. Durch diese Art der Verdrehsicherung besteht keine Gefahr einer Beschädigung der Flügel, wenn das Einsetzen des Körpers (8) vergessen wird.

## Beschreibung

Die Erfindung betrifft eine Flügelzellenpumpe gemäss Oberbegriff des Anspruchs 1.

Flügelzellenpumpen sind bekannt und werden zum Fördern und Portionieren von pastösem Gut eingesetzt, z.B. von Wurstbrät. Aus der CH-A-674 121 ist eine solche Flügelzellenpumpe aus rostfreiem Stahl mit Schiebern, bzw. Flügeln, aus Kunststoff bekannt. Zur Verdrehsicherung des die innere Führungskurvenfläche tragenden Körpers ist dabei in diesem eine Ausnehmung angeordnet, in welche ein Keil eingreift, der am Deckel bzw. der Druckplatte, des Pumpengehäuses befestigt ist. Ferner ist der Körper mittels eines federnd angeordneten Bolzens auf einem Stirnzapfen der Rotorantriebswelle in Richtung des Einlassbereichs bzw. Ausgangbereichs der Pumpe vorgespannt, um dort das Spiel der Flügel zwischen der inneren und der äusseren Führungskurve möglichst aufzuheben.

Im Lebensmittelbereich ist die Flügelzellenpumpe mindestens täglich zu reinigen. Dazu wird unter anderem der Körper mit der inneren Führungskurve aus dem Gehäuse der Pumpe entnommen. Es hat sich gezeigt, dass einerseits die Entnahme des relativ kleinen aber schweren Körpers unpraktisch zu handhaben ist; andererseits kann es bekannterweise vorkommen, dass beim raschen, routinemässigen Zusammensetzen der Pumpe das Einsetzen des Körpers unterbleibt und es hat sich gezeigt, dass in diesem Fall bei der Inbetriebnahme der Pumpe eine Beschädigung der Flügel durch den am Deckel angeordneten Keil erfolgen kann.

Der Erfindung liegt daher die Aufgabe zugrunde, eine Flügelzellenpumpe zu schaffen, welche die genannten Nachteile nicht aufweist.

Diese Aufgabe wird bei der Flügelzellenpumpe der eingangs genannten Art mit den kennzeichnenden Merkmalen des Anspruchs 1 gelöst.

Dadurch, dass die Verdrehsicherung als vorstehender Teil am Körper ausgebildet ist wird einerseits seine Entnehmbarkeit aus der Pumpe verbessert, da der vorstehende Teil eine gute Möglichkeit zum Ergreifen des Körpers bildet; andererseits wird durch die entsprechende Ausnehmung im Deckel anstelle des dort bisher angeordneten Keils eine Beschädigung der Pumpe bei deren Inbetriebnahme ohne den Körper sicher vermieden.

Bei einer bevorzugten Ausführungsform der Erfindung ist ferner das Federmittel zur Vorspannung des Körpers zur Aufhebung des Spiels im Einlassbereich in der Ausformung untergebracht. Dies erlaubt eine Vereinfachung der Pumpenkonstruktion im Vergleich mit der in der CH-A-674 121 gezeigten Lösung. Weiter ist es bevorzugt, wenn der Körper an seiner Unterseite eine Gleitfläche aus Kunststoff aufweist, was das weitgehend verschleissfreie Aufliegen des Körpers auf dem Rotor erlaubt.

Nachfolgend werden Ausführungsbeispiele der Erfindung anhand der Zeichnungen näher erläutert. Dabei zeigt:
Figur 1 eine vereinfachte Draufsicht auf eine Flügelzellenpumpe; und
Figur 2 einen vereinfachten Vertikalschnitt durch eine Pumpe gemäss Figur 1.

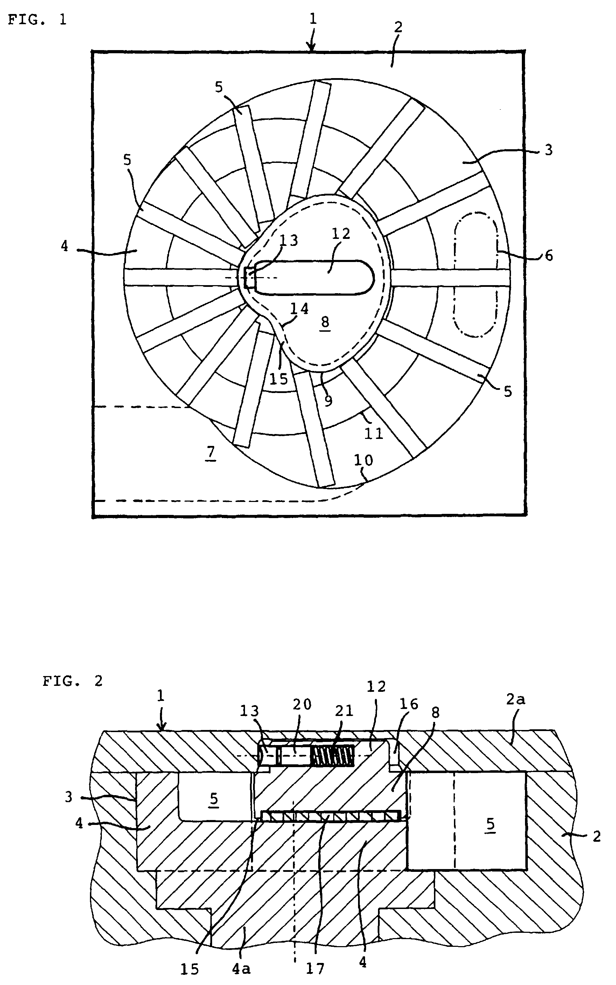

In Figur 1 ist in Draufsicht ohne Deckel eine Flügelzellenpumpe 1 in vereinfachter Form gezeigt, wie sie z.B. grundsätzlich aus CH-A-674 121 bekannt ist. Im Gehäuse 2 ist eine Ausnehmung 3 vorgesehen, deren Wandung 10 die sogenannte äussere Führungskurve für die Flügel 5, auch Schieber genannt, der Pumpe bildet, welche vorzugsweise aus Kunststoff bestehen. Die innere Führungskurve 9 ist an einem in der Gehäuseausnehmung 3 eingelegtem Körper 8 ausgebildet und ein Rotor 4 mit Nuten für die Flügel 5 treibt diese drehend an, wobei auf bekannte Weise ein Gut, vorzugsweise ein pastöse Gut, wie z.B. Wurstbrät zwischen einem Einlass 6 und einem Auslass 7 der Pumpe portioniert und gefördert wird. Der Einlass 6 ist als Oeffnung im Deckel, der auch als Druckplatte bezeichnet wird, der Pumpe vorgesehen und daher in Figur 1 nur strichpunktiert angedeutet.

Figur 2 zeigt einen Vertikalschnitt ebenfalls in vereinfachter Form, durch einen Teil einer Pumpe gemäss Figur 1, wobei in Figur 2 ferner der Deckel 2a und die Antriebswelle 4a teilweise ersichtlich sind. Der Antrieb des Rotors über die Welle 4a und die Antriebsmittel werden, da bekannt und für die vorliegende Erfindung nicht von Bedeutung, hier nicht weiter dargestellt.

Gemäss der Erfindung ist die Verdrehsicherung für den auf dem Rotor 4 aufliegenden Körper 8 als Ausformung 12 an der Oberseite des Körpers ausgeführt, welche bei geschlossenem Deckel 2a in eine Ausnehmung 16 in demselben eingreift, so dass der Körper 8 gegen Verdrehung gesichert in einer definierten Lage fixiert ist. Vorzugsweise ist die Ausformung 12 wie gezeigt als langgestreckte, leisten- oder stabförmige Ausformung gebildet. Die Ausformung kann einstückig mit dem Körper 8 ausgebildet sein oder als aufgesetztes und z.B. angeschraubtes Teil ausgeführt sein. Durch die erfindungsgemässe Ausführung ergeben sich die bereits erwähnten Vorteile.

Vorzugsweise ist die Längsachse der langgestreckten Ausformung auf den Einlass 6 hin gerichtet und ferner ist in oder an der Ausformung ein federndes Mittel vorgesehen, welches den Körper bei geschlossenem Deckel in Richtung auf den Auslass hin presst. In der Ausführungsform gemäss Figur 2 ist dazu in der Ausformung 12 eine Längsbohrung als Sackloch vorgesehen, in welcher eine Feder 21 und ein Bolzen 20 angeordnet sind, dessen vorderer Teil 13 sich an der Wandung der Ausnehmung 16 des Deckels 2a abstützt, so dass der Körper 8 mit einer durch die Feder 21 bestimmten Kraft in Richtung des Einlasses 6 gedruckt wird, um dort das Schieberspiel aufzuheben. Es ist im Vergleich mit der Lösung gemäss CH-A-674 121 ersichtlich, dass die vorliegend als bevorzugte Ausführung geschilderte Lösung eine beträchtliche konstruktive Vereinfachung der Pumpe ergibt.

Weiter ist es bevorzugt, wenn zwischen Rotor 4 und Körper 8 eine Zwischenlage aus Kunststoff vorgesehen ist. Dies ermöglicht die Ausführung des Rotors und des Körpers aus rostfreiem Stahl. Es eignen sich z.B. thermoplastische Kunststoffe hoher Anriebfestigkeit und hoher Formbeständigkeit, z.B. PETP. Die Zwischenlage kann als Einlage oder Auflage auf dem Teil des Rotors vorgesehen sein, auf dem der Körper 8 aufliegt. Vorzugsweise ist eine Einlage 17 am Körper 8 vorgesehen, welche z.B. die Unterseite des Körpers 8 weitgehend bedeckt, z.B. bis auf einen Rand 15, wie auch in Figur 1 mit gestrichelter Linie 14 dargestellt. Die Kunststoff-Zwischenlage kann indes auch nur einen kleineren Bereich der Unterseite des metallenen Teils des Körpers 8 decken, so dass ein grösserer Teil des metallenen Körperteils vom Rotor beabstandet ist als nur der Rand 15. Der Kunststoffteil könnte auch die gesamte untere Fläche des Körpers 8 bedecken. Der Kunststoffteil kann z.B. durch Klebung oder mittels versenkter Schrauben am restlichen Teil des Körpers befestigt sein.

Die Ausformung 12 kann an ihren langen Seitenwänden jeweils mit einer langgestreckten Vertiefung versehen sein, welche das Greifen der Ausformung von Hand zur Entnahme und zum Einsetzen des Körpers bei der Demontage bzw. Montage der Pumpe bei der Reinigung derselben erleichtern.

## Patentansprüche

1. Flügelzellenpumpe (1) mit einem Einlass (6) und einem Auslass (7), einem Gehäuse (2) mit einer den Pumpenraum bildenden Gehäuseausnehmung (3), einem Gehäusedeckel (2a), einer an einem in der Gehäuseausnehmung einsetzbaren, gegen Verdrehung gesicherten Körper (8) angeordneten inneren Führungskurve (9), und mit einer äusseren Führungskurve (10) sowie einem Rotor (4) zum Antrieb der zwischen der inneren und der äusseren Führungskurve (9 und 10) geführten Flügel (5) der Pumpe, dadurch gekennzeichnet, dass die Verdrehsicherung des Körpers (8) von einer Ausformung (12) an dessen Oberseite gebildet wird, welche über den oberen Rand der Gehäuseausnehmung (3) vorsteht und bei geschlossenem Deckel (2a) in eine Ausnehmung (16) desselben eingreift.

2. Flügelzellenpumpe nach Anspruch 1, dadurch gekennzeichnet, dass die Ausformung (12) leistenförmig ausgebildet ist und deren Längsachse auf den Einlass (6) hinweist, und dass sie mit einem federnden Vorspannmittel (20,21) versehen ist, welches einen Wandteil der Ausnehmung (16) im Deckel (2a) beaufschlagt, um den Körper (8) in Richtung auf den Einlass (6) zu drücken.

3. Flügelzellenpumpe nach einem der Ansprüche 1 oder 2, dadurch gekennzeichnet, dass an der Ausformung (12) des Körpers (8) Griffmulden vorgesehen sind.

4. Flügelzellenpumpe nach einem der Ansprüche 1 bis 3, dadurch gekennzeichnet, dass zwischen dem Rotor (4) und dem aus rostfreiem Stahl gebildeten Körper (8) eine Kunststoffzwischenlage (17) angeordnet ist.

5. Flügelzellenpumpe nach Anspruch 4, dadurch gekennzeichnet, dass die Kunststoffzwischenlage als an der Unterseite des Körpers (8) angeordnete Einlage (17) oder Auflage vorgesehen ist.

6. Flügelzellenpumpe nach Anspruch 5, dadurch gekennzeichnet, dass die Einlage oder Auflage in einem Abstand (15) von der Führungskurve (9) des Körpers (8) endet.

7. Körper (8) mit einer die innere Führungskurve (9) einer Flügelzellenpumpe (1) bildenden Umfangsfläche, gekennzeichnet durch eine an seiner Oberseite angeordnete Ausformung (12).

8. Körper nach Anspruch 7, gekennzeichnet durch eine an seiner Unterseite angeordnete Einlage (17) oder Auflage aus Kunststoff.

9. Körper nach Anspruch 7 oder 8, dadurch gekennzeichnet, dass die Ausformung (12) mit Griffmulden versehen ist.
